# EUROPEAN PATENT SPECIFICATION

(11) **EP 0 445 349 B1**
(45) Date of publication and mention of the grant of the patent: **13.10.1993**
(21) Application number: 90112949.4
(22) Date of filing: 06.07.1990
(51) Int. Cl.: F16L 15/04, F16L 41/10

(54) **Hydraulic sealing device for threaded connections**
Hydraulische Dichtungsanordnung für geschraubte Verbindungen
Dispositif d'étanchéité hydraulique pour des raccords à vis

(30) Priority: 07.03.1990 IT 2077290 U
(43) Date of publication of application: 11.09.1991
(73) Proprietor: R.B.M. S.p.A., I-25060 S.Giovanni di Polaveno (Brescia) (IT)
(72) Inventor: Bossini, Serafino, I-25065 Lumezzane (Brescia) (IT)
(74) Representative: Liesegang, Roland, Dr.-Ing.

(56) References cited:
- GB-A- 2 172 358
- US-A- 2 960 353
- US-A- 3 635 501
- US-A- 3 901 538

## Description

The present invention generally relates to hydraulic sealing devices for threaded connections and, more particularly, a hydraulic sealing device of improved type.

It is known that when tubular elements are to be connected to each other or to other hydraulic elements in a water-tight manner use is made of hemp which is wound on the external threads of one element and which, during the screwing thereto of the other element having internal threads, is pressed between the internal and external threads, thereby forming the hydraulic seal.

Alternatively, instead of hemp, use can be made also of a Teflon® sheet which is wound on the external threads of one element and then, during the screwing thereto of the other element having internal threads, is pressed between the internal and external threads for forming the hydraulic seal. However, such sealing devices require rather long assembly times and continuous inspections of the hydraulic seal.

Recently, the above sealing devices have been substituted by other devices generally using packings. However, also in this case, a reliable hydraulic seal cannot be obtained because the packings, which generally are arranged on threaded portions of the elements to be connected to each other, allow the liquid to leak through the threads. Attempts have been made to overcome this disadvantage by pressing the packings by suitable means so as to cause the material forming the packing to be pressed as high as possible against the thread surfaces, but also with this approach some leakage of the liquid cannot be prevented because a thread follows a helical path which cannot be followed by a flat packing, thereby promoting such a liquid leakage.

US A-2.960.353 discloses a fluid thread sealing connection comprising three separate portions, i.e. a connection member having male pipe threads, a telescopic means and a sealing member. The telescopic means comprises two separate telescopic members forming a variable volume chamber intended to receive the sealing member. The sealing member is provided with a center hole having female threads mating with the male threads of a body member to which the sealing connection may be screwed.
The two telescopic members and the sealing member are screwed on the male pipe threads of the connection member and the latter is then screwed in the female pipe threads of the body member. After the connection member is tightly turned into the body member, the second telescopic member is turned with a wrench until the sealing member is tightly compressed in the variable volume chamber. As the second telescopic member is turned, the first telescopic member slides into the second telescopic member and compresses the sealing member.

GB-A-2.172.358 discloses a branch pipe connector comprising a threaded body, a sealing ring mounted on the body, and a collar within which the sealing ring is receive and a flat washer. The washer defines a flat surface generally perpendicular to the axis of the body which surface contacts one axial side of the sealing ring. A nut is supported on the threaded body so as to contact the flat surface of the collar. The collar further comprises a single cylindrical inner surface intended to engage with the radially outer surface of the sealing ring. The sealing ring has bevelled surfaces.

The present invention aims at improving the sealing device of the cited prior art by providing a hydraulic sealing device for threaded connections which is more realiable and very inexpensive.

More particularly, the hydraulic sealing device for threaded connections comprising an externally threaded element, an internally threaded element, a metal ring having a center hole provided with internal threads and intended to be screwed on the externally threaded element, a sealing nut of elastomeric or plastic material having a center hole provided with internal threads mating with the threads of the external threaded element and a conical surface, in which device:
- the metal ring is comprised of a single piece having a center flat portion and an intermediate conical portion ending in a cylindrical outer surface so as to form a conical or frusto-conical recess for receiving the sealing nut;
- the sealing nut has two opposite conical surfaces having the same inclination as the conical portion of the metal ring;
- the diameters of the holes of the metal ring and the sealing nut and the pitch of the threads therein being the same;
- the metal ring and the nut of elastomeric or plastic material being adapted to be screwed on the externally threaded element until they are positioned in contact to each other, so that by screwing the externally threaded element in the internally threaded element the metal ring will press the sealing nut of elastomeric or plastic material against the internally threaded element, and therefore the internal threads of the sealing nut of elastomeric or plastic material will be forced into the threads of the externally threaded element, thereby forming a reliable hydraulic seal between both elements because the internal threads of the nut of elastomeric or plastic material follow the same helical path as the external threads of the externally threaded element.

The present invention will be now described in more detail in connection with the accompanying drawings, wherein:
Fig. 1 shows in a cross-section the pair of elements forming the seating device according to the present invention;
Figs. 2 and 3 show in a cross-section threaded connections obtained by means of the sealing device of Fig. 1;
Fig. 4 shows the detail of the sealing action exerted on the threads of the threaded connection; and
Fig. 5 shows in a plan view the sealing device of Fig. 1 applied by way of example between the internally threaded fitting of a heat radiator and the externally threaded port of a valve associated thereto.

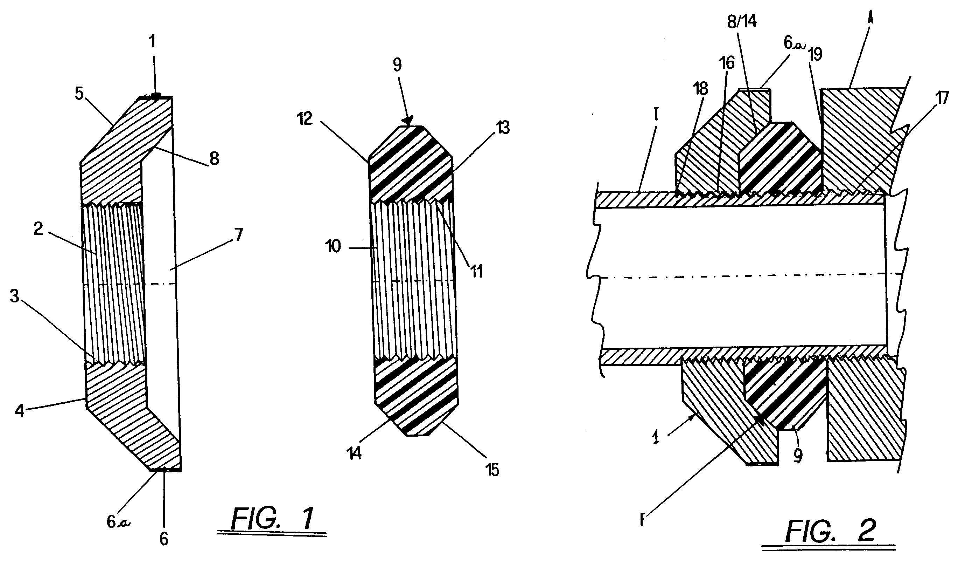

As can be seen from Fig. 1, the sealing device according to the present invention substantially comprises a metal ring 1 and a nut 9 of elastomeric or plastic material, acting as a packing.

The metal ring 1 has a center through-hole 2 provided with internal threads 3. The metal ring 1 has a center plan portion 4 and an intermediate inclined portion 5 ending in a cilindrical outer surface 6. This surface 6 can be knurled as indicated with 6a in order to facilitate the screwing or unscrewing operation of the metal ring 1. By means of this conformation, the metal ring 1 has on one side thereof a recess 7 frusto-conical in shape having the conical surface 8, the purpose of which will be described later. The internal threads 3 of the hole 2 have the same pitch as the external threads of the externally threaded element.

The nut 9 of elastomeric or plastic material forming the packing proper has also a center through-hole 10 provided with internal threads 11. The diameter of the hole 10 corresponds to the diameter of the hole 2 of the metal ring 1 and the pitch of the internal threads 11 corresponds to the pitch of the internal threads 3 of the metal ring 1. In this case the nut 9 of elastomeric or plastic material has in cross section two opposed frusto-conical portions 12 and 13, the conical surfaces 14 and 15 of which correspond to the conical surface 8 of the metal ring. Therefore, the frusto-conical portion 12 or 13 can be accurately fitted in the frusto-conical recess 7 of the metal ring 1.

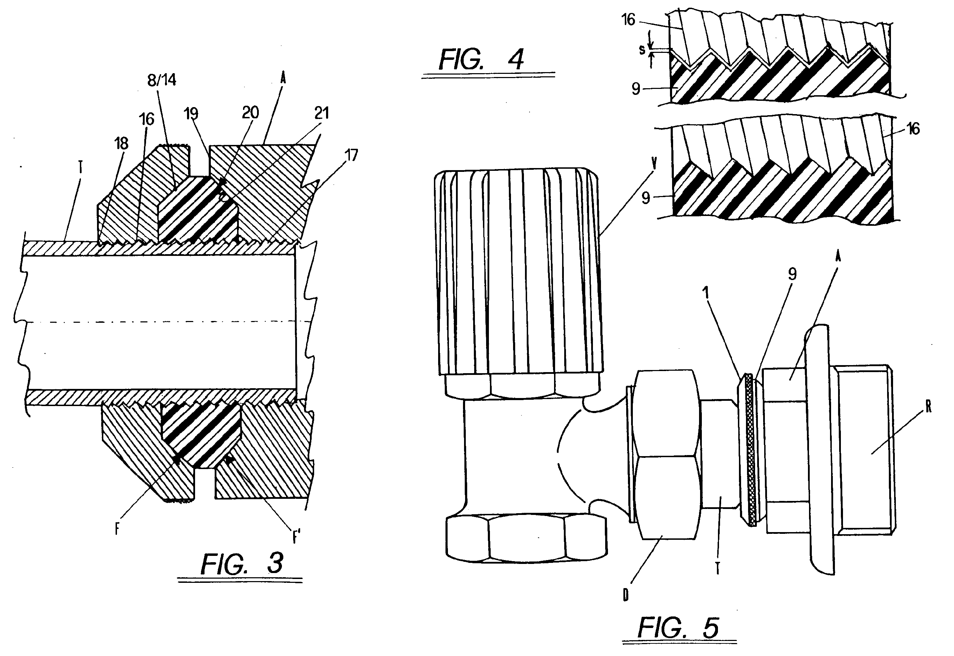

Referring now to Fig. 2, there is shown the sealing device according to the invention assembled between a pipe T provided with an externally threaded end 16 and a fitting A of a hydraulic apparatus having internal threads 17. In order to assemble the sealing device it is necessary to screw the metal ring 1 on the external threads 16 of the pipe T until the thread end is reached, indicated by the step 18 in Fig. 1 and then to screw, also on the external threads 16 of the pipe T, the nut 9 of elastomeric or plastic material until a side thereof is entered the conical recess 7 of the metal ring 1 and is in contact with the inner surface thereof. In so doing, the frusto-conical portion 12 of the nut 9 of elastomeric or plastic material accurately fits in the conical recess 7 of the metal ring 1, so that the conical surface 14 of the nut 9 of elastomeric or plastic material is in contact with the conical surface 8 of the recess 7 of the metal ring 1. Between the internal threads 11 of the nut 9 and the external threads 16 of the pipe T the normal clearance "s" exists, as shown in the upper portion of Fig. 4, permitting the screwing or unscrewing operation of the nut 9.

In order to obtain a reliable hydraulic seal it is necessary to press the nut 9 of elastomeric material against the Surface 19 of the fitting A by screwing the pipe T in the fitting A. In so doing, the internal threads 11 of the nut 9 of elastomeric or plastic material will be forced into the external threads 16 of the pipe T because the conical surface 8 of the inclined portion 5 of the metal ring 1 will compel the pressing force to be directed radially towards the pipe axis, as shown by the arrow F. The clearance "s" is therefore suppressed as shown in the lower portion of Fig. 4 and the leak is thereby prevented because the threads 11 and the threads 16 follow the same helical path.

In Fig. 3, there is shown an embodiment of the invention by means of which a more efficient sealing effect is obtained. To this purpose, the fitting A of the hydraulic apparatus has also a frusto-conical recess 20 intended to receive the frusto-conical portion 13 of the nut 9 of elastomeric or plastic material. This frusto-conical recess 20 has a conical surface 21. For obtaining the seal it is sufficient to screw the pipe T in the fitting A by exerting a force sufficient to cause the metal ring 1 to press the nut 9 of elastomeric or plastic material against the frusto conical recess 20 of the fitting A of the hydraulic apparatus. The compression forces F and F′ exerted by the conical surface 8 of the metal ring 1 and by the conical surface 21 of the fitting A, respectively, against the conical surfaces 14 and 15 of the nut 9 of elastomeric or plastic material causes the latter to be more evenly pressed against the pipe T, so that the internal threads 11 of the nut 9 of elastomeric or plastic material acting as a packing are forced into the external threads 16 of the pipe by suppressing the clearance "s" and, because both the threads 11 and 16 follow the same helical path, the disadvantage of the liquid leakage occurring by the use of a conventional packing is eliminated in a more efficient manner.

In Fig. 5 there is shown, by way of example, the application of the sealing device according to the invention between the fitting A of a heat radiator of a heating system and a valve V through the pipe T and the connecting nut D.

As can be seen from the foregoing, the sealing device according to the present invention offers the following advantages:
- an accurate hydraulic seal obtained by the forced engagement of two threaded elements of which one is formed of a rigid material and the other of a yielding material;
- possibility of changing only the nut of elastomeric or plastic material forming the packing without the need of changing the metal ring;
- easy replaceability of the elements;
- possibility of use on all types of threads.

## Claims

1. Hydraulic sealing device for threaded connections comprising an externally threaded element, an internally threaded element, a metal ring having a center hole provided with internal threads and intended to be screwed on the externally threaded element, a sealing nut of elastomeric or plastic material having a center hole provided with internal threads mating with the threads of the external threaded element and a conical surface, in which device:
- the metal ring (1) is comprised of a single piece having a center flat portion (4) and an intermediate conical portion (5) ending in a cylindrical outer surface (6) so as to form a conical or frusto-conical recess (7) for receiving the sealing nut (9);
- the sealing nut (9) has two opposite conical surfaces (14,15) having the same inclination as the conical portion (5) of the metal ring (1);
- the diameters of the holes (2,10) of the metal ring (1) and the sealing nut (9) and the pitch of the threads therein being the same;
- the metal ring (1) and the nut (9) of elastomeric or plastic material being adapted to be screwed on the externally threaded element (T) until they are positioned in contact to each other, so that by screwing the externally threaded eLement (T) in the internally threaded element (A) the metal ring (1) will press the sealing nut (9) of elastomeric or plastic material against the internally threaded element (A), and therefore the internal threads (11) of the sealing nut (9) of elastomeric or plastic material will be forced into the threads (16) of the externally threaded element (T), thereby forming a reliable hydraulic seal between both elements because the internal threads (11) of the nut (9) of elastomeric or plastic material follow the same helical path as the external threads (16) of the externally threaded element (T).

2. Hydraulic sealing device according to claim 1, characterized in that also the internally threaded element (A) has a frusto-conical recess (20) intended to receive the sealing nut (9) of elastomeric or plastic material.

3. Hydraulic sealing device according to claim 1, characterized in that the metal ring (1) is provided with a knurled outer surface (6a) for facilitating the screwing or unscrewing thereof.

## Patentansprüche

1. Hydraulische Dichtungsanordnung für geschraubte Verbindungen bestehend aus einem Element mit Außengewinde, einem Element mit Innengewinde, einem Metallring mit einer ein Innengewinde aufweisende Mittenbohrung zum Aufschrauben auf das Außengewindeelement, eine Dichtungsmutter aus elastomerischem Material oder Kunststoff mit einer Mittenbohrung versehen mit einem Innengewinde, das mit dem Gewinde des Außengewindeelements aufeinanderpasst und mit einer konischen Oberfläche, worin
- der Metallring (1) aus einem Stück mit einem flachen mittleren Bereich (4) und einem konischen Zwischenbereich (5), der in eine zylinderförmige Außenfläche (6) ausläuft zwecks Bildung einer konischen oder kegelstumpfförmigen Ausnehmung (7) zur Aufnahme der Dichtungsmutter (9), besteht;
- die Dichtungsmutter (9) zwei gegenüberliegende konische Oberflächen (14, 15) mit derselben Neigung wie der konische Bereich (5) des Metallrings (1) aufweist;
- der Durchmesser der Bohrungen (2, 10) des Metallringes (1) bzw. der Dichtungsmutter (9) und die Steigung ihrer Gewinde gleich sind;
- wobei der Metallring (1) und die Dichtungsmutter (9) aus elastomerischem Material oder Kunststoff zum Aufschrauben auf das Außengewindeelement (T) bis sie sich miteinander in Kontakt befinden, geeignet sind, so daß beim Einschrauben des Außengewindeelements (T) in das Innengewindeelement (A) der Metallring (1) die Dichtungsnut (9) gegen das Innengewindeelement (A) drückt, weshalb das Innengewinde (11) der Dichtungsmutter (9) in das Gewinde (16) des Außengewindeelements (T) gepresst wird, wobei eine zuverlässige hydraulische Abdichtung zwischen den beiden Elementen hergestellt wird insofern als das Innengewinde (11) der Dichtungsmutter (9) aus elastomerischem Material oder Kunststoff derselben spiralförmigen Steigung wie das Außengewinde (16) des Außengewindeelements (T) folgt.

2. Hydraulische Dichtungsanordnung nach Anspruch 1, dadurch gekennzeichnet, daß auch das mit einem Innengewinde versehene Element (A) eine kegelstumpfförmige Ausnehmung (20) für die Aufnahme des Dichtungsringes (9) aus elastomerischem Material oder Kunststoff, aufweist.

3. Hydraulische Dichtungsanordnung nach Anpsruch 1, dadurch gekennzeichnet, daß der Metallring (1) mit einer gerändelten Oberfläche (6a) versehen ist, um das Einschrauben davon zu erleichtern.

## Revendications

1. Dispositif d'étanchéité hydraulique pour des raccords à vis qui comporte un élément fileté extérieurement, un élément fileté intérieurement, une bague metallique ayant un trou central fileté intérieurement et destinée à être vissée sur l'élément fileté extérieurement, un écrou d'étanchéité en matériel élastomeric ou plastique ayant un trou central pourvu de filets intérieurs s'époussant avec les filets de l'élément fileté extérieurement et une surface conique, dispositif dans lequel
- la bague metallique (1) est en une seule pièce ayant une partie centrale plate (4) et une partie intermédiaire conique (5) terminant en une surface extérieure cylindrique (6) de façon à former une cavité de forme conique ou tronconique (7) pour recevoir l'écrou d'étanchéité (9);
- ledit écrou d'étanchéité (9) a deux surfaces coniques opposées (14,15) ayant la même inclination de ladite partie conique (5) de ladite bague metallique (1);
- les diamètres des trous (2,10) de ladite bague metallique (1) et dudit écrou d'étanchéité (9) et le pas de leurs filets sont les mêmes;
- ladite bague metallique (1) et ledit écrou d'étanchéité (9) en matériel élastomeric ou plastique étant susceptibles d'être vissés sur l'élément fileté extérieurement (T) jusqu'ils sont en contact entre eux de sorte que la bague metallique (1), en vissant l'élément fileté extérieurement (T) dans l'élément fileté intérieurement (A), presse l'écrou d'étanchéité (9) en matériel élastomerique ou plastique contre l'élément fileté intérieurement (A), et donc les filets intérieurs (11) dudit écrou d'étanchéité (9) sont forcés dans les filets (16) dudit élément fileté extérieurement (T) en formant ainsi une étanchéité hydraulique fiable entre les deux éléments, parce que les filets intérieurs (11) dudit écrou d'étanchéité (9) en matériel élastomerique ou plastique suivent le même pas hélicoïdal des filets extérieurs (16) dudit élément fileté extérieurement (T).

2. Dispositif d'étanchéité hydraulique selon la revendication 1, caractérisé en ce que l'élément fileté intérieurement (A) présente également une cavité tronconique (20) destinée à recevoir ledit écrou d'étanchéité (9) en matériel élastomerique ou plastique.

3. Dispositif d'étanchéité hydraulique selon la revendication 1, caractérisé en ce que ladite bague metallique (1) est pourvue d'une surface extérieure moletée (6a) pour en faciliter le vissage ou le dévissage.
